# EUROPÄISCHE PATENTSCHRIFT

(11) **EP 2 962 380 B1**
(45) Veröffentlichungstag und Bekanntmachung des Hinweises auf die Patenterteilung: **24.08.2016**
(21) Anmeldenummer: 14738402.8
(22) Anmeldetag: 17.06.2014
(51) Int. Cl.: H02J 1/06, H02S 50/00, H02J 3/38

(54) **SCHALTUNGSANORDNUNG ZUR INLINE-SPANNUNGSVERSORGUNG, VERWENDUNG EINER SOLCHEN SCHALTUNGSANORDNUNG UND VORRICHTUNG MIT EINER SOLCHEN SCHALTUNGSANORDNUNG**
CIRCUIT ARRANGEMENT FOR INLINE VOLTAGE SUPPLY, USE OF SUCH A CIRCUIT ARRANGEMENT AND DEVICE HAVING SUCH A CIRCUIT ARRANGEMENT
AGENCEMENT DE CIRCUIT D'ALIMENTATION DE TENSION EN LIGNE, UTILISATION D'UN TEL AGENCEMENT DE CIRCUIT ET DISPOSITIF ÉQUIPÉ D'UN TEL AGENCEMENT DE CIRCUIT

(30) Priorität: 28.06.2013 DE 102013106808
(43) Veröffentlichungstag der Anmeldung: 06.01.2016
(73) Patentinhaber: SMA Solar Technology AG, 34266 Niestetal (DE)
(72) Erfinder: HOPF, Markus, Espenau 34314 (DE)
(74) Vertreter: Lahnor, Peter
(86) Internationale Anmeldenummer: PCT/EP2014/062767
(87) Internationale Veröffentlichungsnummer: WO 2014/206820

(56) Entgegenhaltungen:
- US-B2- 7 864 497

## Beschreibung

### TECHNISCHES GEBIET DER ERFINDUNG

Die Erfindung bezieht sich auf eine Schaltungsanordnung, die zur Inline-Spannungsversorgung einer im Bereich einer einen Gleichstrom führenden Leitung angeordneten elektrischen oder elektronischen Einrichtung geeignet ist.

Unter einer Inline-Spannungsversorgung ist zu verstehen, dass die Schaltungsanordnung elektrische Energie von der den Gleichstrom führenden Leitung abgreift, ohne dabei einen externen Potentialbezug zu nutzen. Bei der elektrischen oder elektronischen Einrichtung kann es sich zum Beispiel um einen Sensor handeln, der im Bereich der den Gleichstrom führenden Leitung einen physikalischen Wert erfasst, wie beispielsweise eine Temperatur, und der insbesondere dazu elektrische Energie benötigt, den physikalischen Wert zu erfassen und an einen entfernten Empfänger zu übermitteln.

Insbesondere soll eine erfindungsgemäße Schaltungsanordnung zur Inline-Spannungsversorgung einer elektrischen oder elektronischen Einrichtung, die im Bereich der Anschlussleitungen eines Photovoltaikgenerators angeordnet ist, geeignet sein, um beispielsweise mit einem Sensor mindestens einen physikalischen Wert, der den Betriebszustand des Photovoltaikgenerators beschreibt, zu erfassen und an eine Überwachungseinrichtung zu übermitteln.

### STAND DER TECHNIK

Zur Inline-Spannungsversorgung einer im Bereich einer einen Gleichstrom führenden Leitung angeordneten elektrischen oder elektronischen Einrichtung ist es grundsätzlich denkbar, in der Leitung ein elektrisches Bauteil anzuordnen, das einen elektrischen Widerstand aufweist. Der von diesem elektrischen Widerstand hervorgerufene Spannungsabfall könnte direkt oder nach Hochsetzen zur Inline-Spannungsversorgung verwendet werden.

Aus der WO 2006/125664 A1 ist eine Schutzschalteinrichtung bekannt, die die Merkmale des Oberbegriffs des unabhängigen Patentanspruchs 1 aufweist. Die Schutzschalteinrichtung ist für ein Solarmodul vorgesehen, bei dem eine Mehrzahl von zum Teil im Normalbetrieb und zur selben Zeit zum Teil im Abschattungsfall arbeitenden Solarzellen in Reihe geschaltet ist. Die Schutzschalteinrichtung ist zur Ausbildung eines Bypasspfads parallel zu der Mehrzahl von Solarzellen anschließbar. Sie weist neben einer bei Solarmodulen an dieser Stelle üblichen Bypassdiode einen der Bypassdiode parallel geschalteten Halbleiterschalter auf, dessen inhärente Freilaufdiode parallel zu der Bypassdiode ausgerichtet ist, d. h. die beiden Dioden weisen gleiche Durchlass- und Sperrrichtungen längs des Bypasspfads auf. Der Halbleiterschalter wird auf Öffnen angesteuert, wenn die parallelen Bypassdioden einen Strom in Durchlassrichtung leiten, um die in der Bypassdiode anfallende Verlustleistung und eine entsprechende Wärmeentwicklung zu reduzieren. Eine Versorgungsschaltung zum Bereitstellen der Steuerspannung für den Halbleiterschalter ist als Ladeschaltung für einen Energiespeicher ausgebildet, die eine Hochsetzung einer im Abschattungsfall zur Verfügung stehenden Spannung über der Bypassdiode in eine zur Ansteuerung des Halbleiterschalters höhere Spannung vornimmt. Die über dem Bypasspfad im Abschattungsfall zur Verfügung stehende Versorgungsspannung soll nicht nur verwendet werden können, um das steuerbare Bypasselement anzusteuern, sondern auch um weitere Schaltungen zu versorgen.

Bei der aus US 2011/0279937 A1 bekannten Schutzschalteinrichtung ist ein MOSFET mit einer Freilaufdiode angeordnet. Zur Steuerung des MOSFET weist die Schutzschalteinrichtung eine Steuerschaltung auf. Die Steuerschaltung weist u. a. eine Reihenschaltung aus einem Widerstand, einer Diode und einem Kondensator auf, die parallel zu dem MOSFET geschaltet ist. Mit der in der Reihenschaltung befindlichen Diode wird erreicht, dass ein Stromfluss in Durchlassrichtung der Diode zum Aufladen des Kondensators möglich ist, während ein Stromfluss in umgekehrter Richtung, der den Kondensator wieder entladen würde, verhindert ist. So wird erreicht, dass durch die über dem Kondensator abfallende Spannung eine Versorgungsspannung zur Spannungsversorgung der Steuerschaltung bereitgestellt wird.

### AUFGABE DER ERFINDUNG

Der Erfindung liegt die Aufgabe zugrunde, eine Schaltungsanordnung mit niedriger Verlustleistung gemäß dem Oberbegriff des unabhängigen Patentanspruchs 1 aufzuzeigen, die kostengünstig bereitstellbar und nicht nur unter besonderen Randbedingungen zur Inline-Spannungsversorgung einer im Bereich einer einen Gleichstrom führenden Leitung angeordneten elektrischen oder elektronischen Einrichtung verwendbar ist.

### LÖSUNG

Die Aufgabe der Erfindung wird durch eine Schaltungsanordnung mit den Merkmalen des unabhängigen Patentanspruchs 1 gelöst. Die abhängigen Patentansprüche 2 bis 10 sind auf bevorzugte Ausführungsformen einer solchen Schaltungsanordnung gerichtet. Die Patentansprüche 11 und 12 betreffen Verwendungen einer erfindungsgemäßen Schaltungsanordnung. Die Patentansprüche 13 bis 16 sind auf Vorrichtungen gerichtet, die neben einer erfindungsgemäßen Schaltungsanordnung eine elektrische oder elektronische Einrichtung aufweisen.

### BESCHREIBUNG DER ERFINDUNG

Bei einer erfindungsgemäßen Schaltungsanordnung mit einer in einer Leitung angeordneten Diode, einer die über die Diode abfallende Spannung abgreifenden Versorgungsteilschaltung und einer der Diode parallel geschalteten weiteren Diode sind die Durchlassrichtungen der Diode und der weiteren Diode antiparallel zueinander ausgerichtet.

Die beiden antiparallel ausgerichteten Dioden sorgen dafür, dass die über der erfindungsgemäßen Schaltungsanordnung in der den Gleichstrom führenden Leitung abfallende Spannung unabhängig von der Stromflussrichtung des Gleichstroms durch die Leitung klein bleibt. Dies kann bei der erfindungsgemäßen Schaltungsanordnung dazu dienen, einen Verpolungsschutz für Anschlüsse zum Integrieren der Schaltungsanordnung in die den Gleichstrom führende Leitung bereitzustellen. In jedem Fall schützen sich aber die beiden Dioden der erfindungsgemäßen Schaltungsanordnung gegenseitig vor größeren Spannungen in ihrer jeweiligen Sperrrichtung. So können für die Schaltungsanordnung Dioden verwendet werden, die nur eine geringe Spannungsfestigkeit aufweisen, auch wenn die einen Gleichstrom führende Leitung einen großen Strom führt, dessen Richtung sich vorübergehend umkehren kann. Beispielsweise kann eine solche Umkehrung der Stromflussrichtung eines Gleichstroms, d. h. ein sogenannter Rückstromfall, bei den Anschlussleitungen eines Photovoltaikgenerators auftreten, wenn dieser im Gegensatz zu anderen parallel geschalteten Photovoltaikgeneratoren abgeschattet ist.

Auch die die über den Dioden abfallende Spannung abgreifende Versorgungsteilschaltung wird durch die antiparallele Anordnung der Dioden vor größeren Spannungen geschützt. Sie kann daher ebenfalls relativ preisgünstig ausgebildet sein. Die Versorgungsteilschaltung ist bei der erfindungsgemäßen Schaltungsanordnung immer vorgesehen und hat die Aufgabe, eine andere elektrische oder elektronische Einrichtung mit einer Spannung zu versorgen.

Die geschilderte Wirkung der beiden antiparallelen Dioden ergibt sich durch die direkte Parallelschaltung der beiden Dioden in der den Gleichstrom führenden Leitung. Dabei sollte keine der beiden antiparallelen Dioden innerhalb ihrer Parallelschaltung mit einem Bauteil in Reihe geschaltet sein, das das Fließen des Gleichstroms signifikant über den Durchlasswiderstand der beiden Dioden hinausgehend behindert. Hierdurch wird sichergestellt, dass die den Spannungsabfall abgreifende Versorgungsschaltung vor größeren Spannungen und somit vor einer Beschädigung ihrer Bauteile geschützt wird. Bei Verwendung möglichst kostengünstiger Bauteile für die Versorgungsschaltung kann eine Beschädigung der Bauteile erfahrungsgemäß i. A. dann ausgeschlossen werden, wenn die im normalen Betrieb insgesamt über den Dioden abfallende Spannung einen Wert von 5 V nicht übersteigt. Damit ist insbesondere ein Kondensator oder eine weitere Diode mit entgegengesetzter Durchlassrichtung als mit einer der beiden antiparallelen Dioden in Reihe geschaltetes elektrisches Element ausgeschlossen, während beispielsweise ein zur Strommessung eingesetzter Shuntwiderstand nicht grundsätzlich ausgeschlossen ist.

Auf der anderen Seite benötigt die Versorgungsteilschaltung, die die über den antiparallelen Dioden abfallende Spannung abgreift, einen Mindestwert der abfallenden Spannung. Ist dieser Mindestwert zumindest für eine begrenzte Zeitdauer beim Anlauf der Versorgungsteilschaltung nicht vorhanden, ist - jedenfalls dann, wenn diese mit preisgünstig verfügbaren Komponenten ausgeführt ist - nicht gewährleistet, dass die Versorgungsteilschaltung fehlerfrei anläuft. Bei Verfügbarkeit von Dioden mit passender Durchlassspannung kann der Mindestwert der über den antiparallelen Dioden abfallenden Spannung bereits mit der Parallelschaltung von genau zwei Dioden mit jeweils einem pn-Übergang in der den Gleichstrom führenden Leitung eingehalten werden. Sind jedoch Dioden mit einer gewünschten Durchlassspannung nicht oder nur zu hohen Kosten erhältlich, so kann grundsätzlich eine oder können beide der beiden antiparallel angeordneten Dioden jeweils auch aus einer Reihenschaltung von zwei oder mehr Teildioden gleicher Durchlassrichtung mit jeweils einem pn-Übergang bestehen. Hierdurch wird die über der jeweils in Durchlassrichtung ausgerichteten Diode abfallende Spannung auf die Summe der Durchlassspannungen der Teildioden erhöht. Dadurch ist es möglich, den benötigten Spannungsabfall kostengünstig und trotzdem hinreichend genau einzustellen. Weiter ist es möglich, eine Teildiode innerhalb einer oder beider Reihenschaltungen von Teildioden durch ein anderes elektrisches Bauteil zu ersetzen, welches im Betrieb einen vergleichbaren Spannungsabfall wie die entsprechende in Durchlassrichtung betriebene Teildiode hervorruft.

Vorzugsweise weist die erfindungsgemäße Schaltungsanordnung weiterhin einen den Dioden parallel geschalteten Halbleiterschalter auf, der von einer Spannungsabsenkteilschaltung angesteuert wird. Auch dieser Halbleiterschalter wird durch die antiparallele Anordnung der Dioden vor größeren Spannungen geschützt. Er kann daher ebenfalls relativ preisgünstig ausgebildet sein, da er zwar auf den in der Leitung fließenden Gleichstrom, nicht aber gleichzeitig auf eine hohe Spannungsfestigkeit ausgelegt werden muss. Mit diesem Halbleiterschalter kann die über den antiparallelen Dioden abfallende Spannung, die der Durchlassspannung der jeweils in Durchlassrichtung angeordneten Diode entspricht, weiter abgesenkt werden, um die in der in Durchlassrichtung ausgerichteten Diode anfallende Verlustleistung zu reduzieren. Dazu wird er von der Spannungsabsenkteilschaltung angesteuert. Die Spannungsabsenkteilschaltung wird von der Versorgungsteilschaltung versorgt, wobei es sich aber versteht, dass die Spannungsabsenkteilschaltung nicht die einzige von der Versorgungsteilschaltung versorgte elektrische oder elektronische Einrichtung ist.

Die Spannungsabsenkteilschaltung steuert den Halbleiterschalter insbesondere dann auf eine Spannungsabsenkung hin an, wenn die Versorgungsteilschaltung mit einer geringeren über der Diode abfallenden Spannung auskommen würde. Je nach Leistungsbedarf der elektrischen oder elektronischen Einrichtung kann diese Spannung daher durch Ansteuern des Halbleiterschalters durch die Spannungsabsenkteilschaltung sehr klein gehalten werden. Auf diese Weise wird die am Ort der beiden Dioden auftretende Verlustwärme minimiert.

Die Diode oder die weitere Diode der erfindungsgemäßen Schaltungsanordnung kann eine inhärente Freilaufdiode des Halbleiterschalters sein, die auch als Body-Diode bezeichnet wird. Die Diode und die weitere Diode können aber auch zusätzlich zu dem Halbleiterschalter vorgesehen sein, auch wenn dieser eine Body-Diode aufweist, um beispielsweise die Eigenschaften der Diode und der weiteren Diode in bestimmter Weise vorzugeben. Der Halbleiterschalter kann zum Beispiel ein MOSFET-Halbleiterschalter sein.

In Verbindung mit dem Halbleiterschalter und der ihn ansteuernden Spannungsabsenkteilschaltung mögen zukünftig anstelle der antiparallel verschalteten Dioden auch ein Varistor oder eine Suppressordiode verwendet werden können. Allerdings sind derzeit verfügbare Varistoren und Suppressordioden hier eher ungeeignet beziehungsweise unvorteilhaft, da sie verglichen mit den Durchlassspannungen von Dioden relativ hohe Schwellspannungen bzw. Durchbruchspannungen aufweisen und daher entsprechend höhere Spannungsbelastungen der parallel angeschlossenen Bauteile, wie auch höhere Verlustleistungen nach sich ziehen. So müsste beispielsweise auch der parallel geschaltete Halbleiterschalter auf höhere Spannungswerte ausgelegt werden, was dann auch dieses Bauteil wiederum teurer gestalten würde und in Summe uneffektiv wäre.

Die Versorgungsteilschaltung der erfindungsgemäßen Schaltungsanordnung kann einen Energiezwischenspeicher für elektrische Energie aufweisen. Dies kann ein Gleichspannungszwischenkreis sein, den ein DC/DC-Wandler der Versorgungsteilschaltung speist. Der DC/DC-Wandler kann insbesondere ein Hochsetzsteller sein, der die über der bzw. den Diode(n) abfallende Spannung in eine benötigte Versorgungsspannung in dem Gleichspannungszwischenkreis hochsetzt. Aus dem Gleichspannungszwischenkreis können sich dann die Spannungsabsenkungsteilschaltung, soweit vorhanden, und in jedem Fall die elektrische oder elektronische Einrichtung mit elektrischer Energie versorgen.

Wenn der DC/DC-Wandler der erfindungsgemäßen Schaltungsanordnung den Gleichspannungszwischenkreis mit einer festen Polarität unabhängig von der Polarität der über den Dioden abfallenden Spannung auflädt, kann die erfindungsgemäße Schaltungsanordnung mit beliebiger Orientierung in der einen Gleichstrom führenden Leitung angeordnet werden, bzw. sie bleibt auch bei Änderung der Stromflussrichtung des Gleichstroms durch die Leitung funktionsfähig.

Die Versorgungsteilschaltung der erfindungsgemäßen Schaltungsanordnung kann auch andere oder zusätzliche Energiezwischenspeicher aufweisen. So kann zusätzlich zu dem oben beschriebenen Gleichspannungszwischenkreis ein weiterer Energiezwischenspeicher vorgesehen sein, der durch denselben DC/DC-Wandler gespeist wird. Der weitere Energiespeicher kann beispielsweise ein Superkondensator (Doppelschichtkondensator, Pseudokondensator oder Hybridkondensator) oder ein Akkumulator sein. Der weitere Energiezwischenspeicher hat den Vorteil, dass die Versorgung durch die Versorgungsteilschaltung auch bei länger anhaltender Abwesenheit eines Stromflusses durch die einen Gleichstrom führende Leitung anhält. Bei Wiederkehr des Stromflusses kann der weitere Energiezwischenspeicher wieder aufgeladen werden. Zusätzlich oder alternativ zu einem wiederaufladbaren weiteren Energiezwischenspeicher ist es auch möglich, einen nicht aufladbaren weiteren Energiespeicher z.B. in Form einer Batterie einzusetzen. Dieser kann beispielsweise eine Uhr puffern, um gegebenenfalls einen Zeitstempel für Sensordaten zu erzeugen. Bei Verwendung eines nicht wiederaufladbaren weiteren Energiespeichers wird dieser nicht durch den DC/DC-Wandler gespeist und muss bei Entladung getauscht werden.

Die Spannungsabsenkteilschaltung der erfindungsgemäßen Schaltungsanordnung kann den Halbleiterschalter in Abhängigkeit von einem Ladezustand des Energiezwischenspeichers ansteuern. Konkret kann die Spannungsabsenkteilschaltung beispielsweise so ausgelegt sein, dass sie den Halbleiterschalter zumindest teilweise schließt, wenn der Gleichspannungszwischenkreis auf eine vorgegebene Zwischenkreisspannung geladen ist. Diese vorgegebene Zwischenkreisspannung zeigt an, dass ausreichend elektrische Energie in dem Gleichspannungszwischenkreis als Energiezwischenspeicher zur Verfügung steht. Umgekehrt kann die Spannungsabsenkteilschaltung den Halbleiterschalter zumindest teilweise wieder öffnen, wenn der Gleichspannungszwischenkreis auf eine tiefer liegende vorgegebene Zwischenkreisspannung entladen ist.

Alternativ kann die Spannungsabsenkteilschaltung der erfindungsgemäßen Schaltungsanordnung den Halbleiterschalter auch derart ansteuern, dass ein Spannungsabfall über den Dioden unabhängig von einem innerhalb der Leitung fließenden Strom auf einen konstanten Wert unterhalb der Durchlassspannungen der Dioden geregelt wird.

Eine erfindungsgemäße Schaltungsanordnung ist insbesondere zur Inline-Spannungsversorgung einer im Bereich einer einen Gleichstrom führenden Leitung angeordneten elektrischen oder elektronischen Einrichtung vorgesehen. Dabei kann die stromführende Leitung insbesondere eine von zwei Anschlussleitungen eines Photovoltaikgenerators sein, durch die ein vergleichsweise großer Strom fließt und durch die auch Rückströme auftreten können.

Bei einer erfindungsgemäßen Vorrichtung mit einer elektrischen oder elektronischen Einrichtung und einer erfindungsgemäßen Schaltungsanordnung weist die erfindungsgemäße Schaltungsanordnung Anschlüsse zum Anordnen der Diode der Schaltungsanordnung in einer einen Gleichstrom führenden Leitung auf. Da der Diode die weitere Diode und der Halbleiterschalter parallel geschaltet sind, liegen auch diese dann grundsätzlich in der stromführenden Leitung.

Die elektrische oder elektronische Einrichtung der erfindungsgemäßen Vorrichtung kann insbesondere mindestens einen Sensor, beispielsweise einen Temperatursensor, einen Sensor zur Erfassung der Lichtintensität (Lichtsensor), einen Sensor zur Bestimmung der Windstärke oder ähnliches aufweisen. Sie wird dann auch als Sensor-Box bezeichnet.

Weiterhin kann die elektrische oder elektronische Einrichtung der erfindungsgemäßen Vorrichtung eine Kommunikationsschnittstelle aufweisen, über die sie mit einer entfernt angeordneten Einrichtung, beispielsweise einer Auswerteeinrichtung für mit dem oder den Sensor(en) erfasste Messwerte, kommuniziert.

Die Kommunikationsschnittstelle kann zum Beispiel einen Übertrager zur Powerline-Kommunikation über die einen Gleichstrom führende Leitung aufweisen, dessen eine Wicklung zwischen den Anschlüssen mit der Diode in Reihe geschaltet ist. Die eine Wicklung des Übertragers ist damit auch mit der weiteren Diode und dem Halbleiterschalter in Reihe geschaltet, die parallel zu der Diode angeordnet sind.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der dargestellten relativen Anordnung und Wirkverbindung mehrerer Bauteile - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Schaltungsanordnung; und
- **Fig. 2**: zeigt eine erfindungsgemäße Vorrichtung mit einer erfindungsgemäßen Schaltungsanordnung in einer Verwendung bei einer Photovoltaikanlage.

### FIGURENBESCHREIBUNG

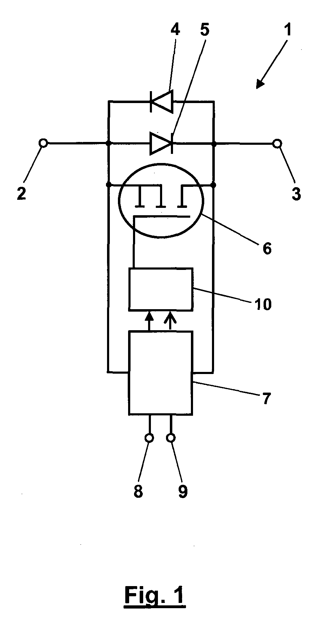

Die in **Fig. 1** gezeigte Schaltungsanordnung 1 weist zwei Anschlüsse 2 und 3 zum Anordnen der Schaltungsanordnung 1 in einer einen Gleichstrom führenden Leitung auf. Zwischen den Anschlüssen 2 und 3 sind eine Diode 4, eine weitere Diode 5, ein Halbleiterschalter 6 und ein Eingang einer Versorgungsteilschaltung 7 parallel geschaltet. Die Durchlassrichtungen der Dioden 4 und 5 zwischen den Anschlüssen 2 und 3 sind einander entgegengerichtet. Diese Anordnung wird hier auch als antiparallel bezeichnet. Die antiparallelen Dioden 4 und 5 lassen bei einem zwischen den Anschlüssen 2 und 3 fließenden Gleichstrom, unabhängig von dessen Stromflussrichtung, eine kleine Spannung zwischen den Anschlüssen 2 und 3 abfallen, die der Durchlassspannung der jeweils in Durchlassrichtung ausgerichteten Diode 4 oder 5 entspricht. Diese Spannung wird von der Versorgungsteilschaltung 7 abgegriffen, um daraus eine Versorgungsspannung zwischen zwei Ausgangsanschlüssen 8 und 9 zu erzeugen. Die Ausgangsspannung zwischen den Ausgangsanschlüssen 8 und 9 ist regelmäßig höher als die zwischen den Anschlüssen 2 und 3 abfallende Spannung. Darüber hinaus weist die Versorgungsteilschaltung 7 in der Regel einen (hier nicht dargestellten) Energiezwischenspeicher auf. Wenn dieser Energiezwischenspeicher aufgeladen ist, wird die zwischen den Anschlüssen 2 und 3 abfallende Spannung nicht mehr benötigt, und, wenn sie beibehalten würde, würde sie entsprechend zu einer unnötigen Verlustleistung der Schaltungsanordnung 1 führen. Um diese Verlustleistung zu verringern, ist der Halbleiterschalter 6 vorgesehen, der hier als MOSFET ausgebildet ist. Dem Halbleiterschalter 6 ist eine Spannungsabsenkteilschaltung 10 zugeordnet, die von der Versorgungsteilschaltung 7 versorgt wird und die den Halbleiterschalter 6 dann zumindest teilweise schließt, wenn der Energiezwischenspeicher der Versorgungsteilschaltung 7 ausreichend geladen ist. Entsprechend öffnet die Spannungsabsenkteilschaltung 10 den Halbleiterschalter 6 zumindest teilweise wieder, wenn der Ladezustand des Energiezwischenspeichers der Versorgungsteilschaltung 7 unter ein gewisses Mindestmaß gesunken ist. In Fig. 1 sind daher zwei Verbindungen zwischen der Spannungsabsenkteilschaltung 10 und der Versorgungsteilschaltung 7 durch unterschiedliche Pfeile angedeutet, die für die Versorgung und die Information über den Ladezustand des Energiezwischenspeichers vorgesehen sind. Der zumindest teilweise geschlossene Halbleiterschalter 6 stellt einen Bypasspfad zu den antiparallelen Dioden 4 und 5 bereit, über den der Strom zwischen den Anschlüssen 2 und 3 mit geringerem Widerstand und entsprechend geringerer Verlustleistung fließen kann. Die antiparallelen Dioden 4 und 5 schützen den Halbleiterschalter 6, aber auch sich selbst, vor größeren Spannungen zwischen den Anschlüssen 2 und 3. Um zu gewährleisten, dass ein großer Strom zwischen den Anschlüssen 2 und 3 fließen kann, ist es ausreichend, sämtliche Halbleiterbauelemente 4 bis 6 ganz für diesen großen Strom auszulegen. Sie müssen jedoch nicht gleichzeitig auch für größere Spannung in Sperrrichtung ausgelegt werden, da große Spannungen aufgrund der antiparallelen Verschaltung der Dioden nicht auftreten können. Für die Versorgungsteilschaltung 7 gilt, dass eingangsseitig nie mehr als die Durchlassspannung der Dioden 4 und 5 anliegt. Entsprechend kann die gesamte Schaltungsanordnung 1 aus Halbleiterbausteinen aufgebaut sein, die lediglich eine geringe Spannungsklasse aufweisen und demzufolge entsprechend preisgünstig verfügbar sind.

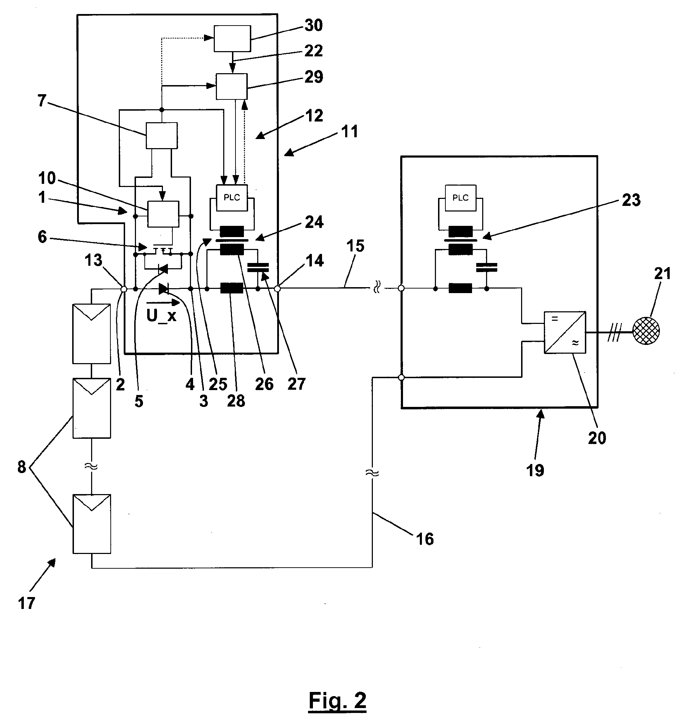

**Fig. 2** zeigt eine Vorrichtung 11 mit einer Schaltungsanordnung 1 und einer elektronischen Einrichtung 12, die von der Schaltungsanordnung 1 mit Spannung, d. h. elektrischer Energie, versorgt wird. Die Vorrichtung 11 ist über Anschlüsse 13 und 14 in einer einen Gleichstrom führenden Leitung 15 angeordnet. Bei der Leitung 15 handelt es sich um eine von zwei Anschlussleitungen 15 und 16 eines Photovoltaikgenerators 17 mit mehreren in Reihe geschalteten Photovoltaikmodulen 18. Über die Anschlussleitungen 15 und 16 ist der Photovoltaikgenerator 17 an einen Wechselrichter 19 angeschlossen. Der Wechselrichter 19 weist einen DC/AC-Wandler 20 auf, mit dem elektrische Energie von dem Photovoltaikgenerator 17 in ein Wechselstromnetz 21 eingespeist wird. Der Wechselrichter 19 umfasst eine Kommunikationsschnittstelle 23 zur Powerline-Kommunikation (PLC) mit der Vorrichtung 11, spezieller mit dessen elektronischer Einrichtung 12. Die elektronische Einrichtung 12 weist eine der Kommunikationsschnittstelle 23 entsprechende Kommunikationsschnittstelle 24 auf. Die Kommunikationsschnittstelle 24 umfasst einen Übertrager 25, dessen eine Wicklung 26 zwischen den Anschlüssen 13 und 14 mit der Schaltungsanordnung 1 in Reihe geschaltet ist. Genauer gesagt ist die Wicklung 26 mit einer Kapazität 27 in Reihe geschaltet, diese Reihenschaltung ist mit einer Induktivität 28 parallel geschaltet, und diese Parallelschaltung ist wiederum mit der Schaltungsanordnung 1 zwischen den Anschlüssen 13 und 14 in Reihe geschaltet. Diese Verschaltungsart gewährleistet einen Pfad für die hochfrequenten PLC-Signale über die Induktivität 26 und die Kapazität 27 und einen weiteren Pfad für den Gleichstrom über die Induktivität 28. Damit wird die ursprüngliche Gleichstromleitung quasi in einen HF-Pfad und einen Gleichstrompfad aufgespalten. Auf diese Weise lässt sich der Übertrager 25 klein und kostengünstig auslegen. Optional kann eine weitere Kapazität parallel zu der Induktivität 28 angeordnet werden. Diese wirkt dann zusammen mit der Induktivität 28 als Bandsperre, die für Signale mit der Frequenz der PLC ausgelegt werden kann, damit diese gezielt umgeleitet werden. Man kann die Kommunikationsschnittstelle 24 auch ohne den Übertrager 35 aufbauen, wobei das PLC Signal dann direkt über die Kapazität 27 abgegriffen bzw. angelegt wird.

Die Kommunikationsschnittstelle 24 wird von der Versorgungsteilschaltung 7 mit elektrischer Energie versorgt, was hier nur durch einen Pfeil angedeutet ist. Zur wechselseitigen Kommunikation ist die Kommunikationsschnittstelle 24 an einen Mikroprozessor 29 angeschlossen, der wiederum Messwerte 22 von einem Sensor 30 erhält. Auch der Mikroprozessor 29 und der Sensor 30 werden von der Versorgungsteilschaltung 7 mit elektrischer Energie versorgt. Der Mikroprozessor 29 verarbeitet die Messwerte 22 des Sensors 30 und übermittelt sie über die Kommunikationsschnittstelle 24, die Leitung 15 und die Kommunikationsschnittstelle 23 an den Wechselrichter 19. Die dargestellten Kommunikationsschnittstelle 24 in Form einer Powerline-Kommunikationseinheit, der nicht näher bezeichnete Sensor 30, sowie der Mikroprozessor 29 sind lediglich Beispiele elektronischer Einrichtungen 12, die über die Versorgungsteilschaltung 7 mit elektrischer Energie versorgt werden, wobei diese elektrische Energie dem in der Leitung 15 fließenden Gleichstrom entnommen wird. Alternativ und/oder kumulativ können auch andere elektronische Einrichtungen 12 als die dargestellten von der Versorgungsteilschaltung 7 versorgt werden. Beispielsweise ist alternativ zu der dargestellten Kommunikationsschnittelle 24 in Form einer Powerline-Kommunikationseinheit auch eine Kommunikationsschnittstelle 24 denkbar, die Informationen auf Basis einer Funkübertragung übermittelt. Bei der Spannungsabsenkteilschaltung 10 ist in Fig. 2 angedeutet, dass auch diese die über den antiparallelen Dioden 4 und 5 abfallende Spannung direkt abgreift, um sie durch Ansteuerung des Halbleiterschalters 6 in Abhängigkeit von dem Ladezustand des Energiezwischenspeichers der Energieversorgungsteilschaltung 7 oder auch unabhängig davon auf einen bestimmten Wert unterhalb der Durchlassspannung der jeweils in Durchlassrichtung ausgerichteten Diode einzuregeln. Zur Absenkung der Durchlassspannung kann der Halbleiterschalter 6 beispielsweise auf einen zeitlich konstanten Spannungsabfall hin geregelt werden, der kleiner ist als die Durchlassspannung der in Durchlassrichtung ausgerichteten Diode. Der konstante Spannungsabfall kann so gewählt werden, dass dennoch weiterhin ein ausreichender Energiefluss in den Energiezwischenspeicher möglich ist. Desweiteren ist es möglich, dass der Halbleiterschalter 6 bei ausreichend vorhandener Energie in dem Energiezwischenspeichers zumindest zeitweise voll durchgeschaltet wird, um die Verlustleistung über den Dioden zumindest zeitweise auf einen Minimalwert hin abzusenken. Während der Zeitdauer, in der der Halbleiterschalter 6 voll durchgeschaltet ist, ist es nicht möglich, den Energiezwischenspeicher nachzuladen. Infolge der aus dem Energiezwischenspeicher abfließenden elektrischen Leistung, die zur Versorgung der elektronischen Einrichtungen 12 erforderlich ist, entlädt sich der Energiezwischenspeicher in dem Zeitraum des voll durchgeschalteten Halbleiterschalters 6. Auf diese Weise ergibt sich ein schwankender Ladezustand des Energiezwischenspeichers. Der Halbleiterschalter 6 kann auch in geregelter Form derart angesteuert werden, dass als Eingangsgröße für die Regelung der Ladezustand des Energiezwischenspeichers herangezogen wird und dieser somit auf einem vorgegebenen Level gehalten wird. Dieser vorgegebene Level kann ein zeitlich konstanter Wert sein, er kann jedoch auch aus einem Wertepaar in Form einer unteren und oberen Toleranzgrenze bestehen. In letzterem Fall schwankt der Istwert des Ladezustandes des Energiezwischenspeichers zwischen dem oberen und unteren Toleranzwert. Bezüglich des Halbleiterschalters 6 ist in Fig. 2 angedeutet, dass die weitere Diode 5 als dessen inhärente Freilaufdiode oder Body-Diode ausgebildet ist. Dabei ist die Diode 4 in der üblichen Stromflussrichtung des Gleichstroms durch die Leitung 15 ausgerichtet.

Die Vorrichtung 11 kann ohne großen Aufwand an jedem Ort längs der Leitung 15 in die Leitung 15 eingebunden werden, insbesondere weiter entfernt von dem Wechselrichter 19, d. h. nahe an dem Photovoltaikgenerator 17. Besonders einfach gestaltet sich eine Montage der Vorrichtung 11, wenn nahe des geplanten Montageortes bereits ein Stecker / Buchse Verbindung vorliegt. Diese kann nämlich einfach aufgetrennt und beidseitig mit der Vorrichtung 11 verbunden werden. Die Vorrichtung 11 versorgt sich inline aus dem durch die Leitung 15 fließenden Strom, d. h. ohne zusätzlichen externen Potentialbezug oder Anschluss an die andere Anschlussleitung 16 des Photovoltaikgenerators 17. Dabei tritt zwar eine Verlustleistung in der jeweils von dem Strom durchflossenen Diode 4, 5 oder von dem Strom durchflossenen Halbleiterschalter 6 auf. Diese Verlustleistung wird jedoch durch Minimierung des Spannungsabfalls über den antiparallelen Dioden 4 und 5 durch entsprechende Ansteuerung des Halbleiterschalters 6 auf das für die Versorgung der elektronischen Einrichtung 12 notwendige Maß begrenzt.

### BEZUGSZEICHENLISTE

- 1: Schaltungsanordnung
- 2: Anschluss
- 3: Anschluss
- 4: Diode
- 5: Diode
- 6: Halbleiterschalter
- 7: Versorgungsteilschaltung
- 8: Ausgangsanschluss
- 9: Ausgangsanschluss
- 10: Spannungsabsenkteilschaltung
- 11: Vorrichtung
- 12: elektronische Einrichtung
- 13: Anschluss
- 14: Anschluss
- 15: Leitung
- 16: Anschlussleitung
- 17: Photovoltaikgenerator
- 18: Photovoltaikmodul
- 19: Wechselrichter
- 20: DC/AC-Wandler
- 21: Wechselstromnetz
- 22: Messwert
- 23: Kommunikationsschnittstelle
- 24: Kommunikationsschnittstelle
- 25: Übertrager
- 26: Wicklung
- 27: Kapazität
- 28: Induktivität
- 29: Mikroprozessor
- 30: Sensor

## Patentansprüche

1. Schaltungsanordnung (1), mit
- einer in einer Leitung (15) angeordneten Diode (4),
- einer die über der Diode (4) abfallende Spannung abgreifenden Versorgungsteilschaltung (7),
- einer der Diode (4) parallel geschalteten weiteren Diode (5),
**dadurch gekennzeichnet,**
- **dass** Durchlassrichtungen der Diode (4) und der weiteren Diode (5) antiparallel zueinander ausgerichtet sind,
- wobei die antiparallelen Dioden (4,5) bei einem zwischen Anschlüssen (2, 3) der Schaltungsanordnung (1) fließenden Gleichstrom, unabhängig von dessen Stromflussrichtung, eine kleine Spannung zwischen den Anschlüssen (2, 3) abfallen lassen, die auf die Durchlassspannung der jeweils in Durchlassrichtung ausgerichteten Diode (4, 5) begrenzt ist.

2. Schaltungsanordnung (1) nach Anspruch 1, **dadurch gekennzeichnet, dass** den Dioden (4, 5) ein Halbleiterschalter (6) parallel geschaltet ist, der von einer Spannungsabsenkteilschaltung (10) der Schaltungsanordnung (1) angesteuert wird.

3. Schaltungsanordnung (1) nach Anspruch 2, **dadurch gekennzeichnet, dass** die Diode (4) oder die weitere Diode (5) eine inhärente Freilaufdiode des Halbleiterschalters (6) ist.

4. Schaltungsanordnung (1) nach einem der vorhergehenden Ansprüche, **dadurch gekennzeichnet, dass** die Versorgungsteilschaltung (7) einen Energiezwischenspeicher aufweist.

5. Schaltungsanordnung (1) nach Anspruch 4, **dadurch gekennzeichnet, dass** die Versorgungsteilschaltung (7) einen Gleichspannungszwischenkreis als Energiezwischenspeicher und einen den Gleichspannungszwischenkreis speisenden DC/DC-Wandler aufweist.

6. Schaltungsanordnung (1) nach Anspruch 5, **dadurch gekennzeichnet, dass** der DC/DC-Wandler ein Hochsetzsteller ist.

7. Schaltungsanordnung (1) nach Anspruch 5 oder 6, **dadurch gekennzeichnet, dass** der DC/DC-Wandler den Gleichspannungszwischenkreis mit einer festen Polarität auflädt.

8. Schaltungsanordnung (1) nach einem der Ansprüche 4 bis 7, **dadurch gekennzeichnet, dass** die Versorgungsteilschaltung (7) einen Superkondensator oder einen Akkumulator als Energiezwischenspeicher aufweist.

9. Schaltungsanordnung (1) nach Anspruch 2 oder 3 und einem der Ansprüche 4 bis 8, **dadurch gekennzeichnet, dass** die Spannungsabsenkteilschaltung (10) den Halbleiterschalter (6) in Abhängigkeit von einem Ladezustand des Energiezwischenspeichers ansteuert.

10. Schaltungsanordnung (1) nach Anspruch 2 oder 3 oder einem der davon abhängigen Ansprüche 4 bis 8, **dadurch gekennzeichnet, dass** die Spannungsabsenkteilschaltung (10) den Halbleiterschalter (6) derart ansteuert, dass ein Spannungsabfall über den Dioden (4, 5) unabhängig von einem innerhalb der Leitung (15) fließenden Strom auf einen konstanten Wert geregelt wird.

11. Verwendung einer Schaltungsanordnung (1) nach einem der vorhergehenden Ansprüche zur Inline-Spannungsversorgung einer im Bereich einer einen Gleichstrom führenden Leitung (15) angeordneten elektrischen oder elektronischen Einrichtung (12).

12. Verwendung nach Anspruch 11, **dadurch gekennzeichnet, dass** die einen Gleichstrom führende Leitung (15) eine von zwei Anschlussleitungen (15, 16) eines Photovoltaikgenerators (17) ist.

13. Vorrichtung (11) mit einer elektrischen oder elektronischen Einrichtung (12) und einer Schaltungsanordnung (1) nach einem der Ansprüche 1 bis 10, wobei Anschlüsse (13, 14) zum Anordnen der Diode (4) der Schaltungsanordnung (1) in einer einen Gleichstrom führenden Leitung (15) vorgesehen sind.

14. Vorrichtung (11) nach Anspruch 13, **dadurch gekennzeichnet, dass** die elektrische oder elektronische Einrichtung (12) mindestens einen Sensor (30) aufweist.

15. Vorrichtung (11) nach Anspruch 13 oder 14, **dadurch gekennzeichnet, dass** die elektrische oder elektronische Einrichtung (12) eine Kommunikationsschnittstelle (24) aufweist.

16. Vorrichtung (11) nach Anspruch 15, **dadurch gekennzeichnet, dass** die Kommunikationsschnittstelle (24) einen Übertrager (25) zur Powerline-Kommunikation über die einen Gleichstrom führende Leitung (15) aufweist, dessen eine Wicklung (26) zwischen den Anschlüssen (13, 14) mit der Diode (4) in Reihe geschaltet ist.

## Claims

1. A circuit arrangement (1), comprising
- a diode (4) disposed in a line (15),
- a supply subcircuit (7) tapping the voltage drop across the diode (4),
- a further diode (5) connected in parallel with the diode (4),
**characterized in that**
- forward-bias directions of the diode (4) and of the further diode (5) are oriented anti-parallel to each other,
- wherein, when a direct current is flowing between terminals (2, 3) of the circuit arrangement (1), the anti-parallel diodes (4, 5) cause a small voltage drop between the terminals (2, 3) irrespective of the current flow direction, which voltage is limited to the forward voltage of the diode (4, 5) that is currently forward biased.

2. The circuit arrangement (1) as claimed in claim 1, **characterized in that** a semiconductor switch (6) is connected in parallel with the diodes (4, 5) and is controlled by a voltage-reduction subcircuit (10) of the circuit arrangement (1).

3. The circuit arrangement (1) as claimed in claim 2, **characterized in that** the diode (4) or the further diode (5) is an intrinsic freewheeling diode of the semiconductor switch (6).

4. The circuit arrangement (1) as claimed in any of the preceding claims, **characterized in that** the supply subcircuit (7) comprises a temporary energy store.

5. The circuit arrangement (1) as claimed in claim 4, **characterized in that** the supply subcircuit (7) comprises a DC link as the temporary energy store and comprises a DC/DC converter that supplies the DC link.

6. The circuit arrangement (1) as claimed in claim 5, **characterized in that** the DC/DC converter is a step-up converter.

7. The circuit arrangement (1) as claimed in either claim 5 or claim 6, **characterized in that** the DC/DC converter charges the DC link with a fixed polarity.

8. The circuit arrangement (1) as claimed in any of claims 4 to 7, **characterized in that** the supply subcircuit (7) comprises a super capacitor or a rechargeable battery as the temporary energy store.

9. The circuit arrangement (1) as claimed in either claim 2 or claim 3 and any of claims 4 to 8, **characterized in that** the voltage-reduction subcircuit (10) controls the semiconductor switch (6) depending on a charge level of the temporary energy store.

10. The circuit arrangement (1) as claimed in either claim 2 or claim 3 or any of claims 4 to 8 dependent thereon, **characterized in that** the voltage-reduction subcircuit (10) controls the semiconductor switch (6) such that a voltage drop across the diodes (4, 5) is controlled to a constant value irrespective of a current flowing inside the line (15).

11. A use of a circuit arrangement (1) as claimed in any of the preceding claims for the inline supply of voltage to an electrical or electronic apparatus (12) located in the region of a DC line (15).

12. The use as claimed in claim 11, **characterized in that** the DC line (15) is one of two supply lines (15, 16) of a photovoltaic generator (17).

13. A device (11) comprising an electrical or electronic apparatus (12) and comprising a circuit arrangement (1) as claimed in any of claims 1 to 10, wherein terminals (13, 14) are provided for arranging the diode (4) of the circuit arrangement (1) in a DC line (15).

14. The device (11) as claimed in claim 13, **characterized in that** the electrical or electronic apparatus (12) comprises at least one sensor (30).

15. The device (11) as claimed in either claim 13 or claim 14, **characterized in that** the electrical or electronic apparatus (12) comprises a communication interface (24).

16. The device (11) as claimed in claim 15, **characterized in that** the communication interface (24) comprises a transducer (25) for power-line communication over the DC line (15), one winding (26) of which transducer is connected between the terminals (13, 14) in series with the diode (4).

## Revendications

1. Agencement de circuit (1), avec
- une diode (4) disposée dans une ligne (15),
- une partie de circuit d'alimentation (7) prélevant la tension tombant sur la diode (4),
- une autre diode (5) montée en parallèle à la diode (4),
**caractérisé en ce que**
- les directions de passage de la diode (4) et de l'autre diode (5) sont orientées de manière antiparallèle l'une par rapport à l'autre,
- les diodes antiparallèles (4, 5) pour un courant continu passant entre les bornes (2, 3) de l'agencement de circuit (1), indépendamment de la direction de passage de courant de celui-ci, faisant tomber une petite tension entre les bornes (2, 3), qui est limitée à la tension de passage de la diode (4,5) respectivement orientée dans la direction de passage.

2. Agencement de circuit (1) selon la revendication 1, **caractérisé en ce qu'**un commutateur à semi-conducteur (6) est branché parallèlement aux diodes (4, 5), qui est commandé par une partie de circuit de baisse de tension (10) de l'agencement de circuit (1).

3. Agencement de circuit (1) selon la revendication 2, **caractérisé en ce que** la diode (4) ou l'autre diode (5) est une diode de roue libre inhérente du commutateur à semi-conducteur (6).

4. Agencement de circuit (1) selon l'une quelconque des revendications précédentes, **caractérisé en ce que** la partie de circuit d'alimentation (7) comporte un accumulateur intermédiaire d'énergie.

5. Agencement de circuit (1) selon la revendication 4, **caractérisé en ce que** la partie de circuit d'alimentation (7) comporte un circuit intermédiaire de tension continue en tant qu'accumulateur intermédiaire d'énergie et un convertisseur à courant continu alimentant le circuit intermédiaire de tension continue.

6. Agencement de circuit (1) selon la revendication 5, **caractérisé en ce que** le convertisseur à courant continu est un convertisseur élévateur.

7. Agencement de circuit (1) selon la revendication 5 ou 6, **caractérisé en ce que** le convertisseur de courant continu charge le circuit intermédiaire de tension continue avec une polarité fixe.

8. Agencement de circuit (1) selon l'une quelconque des revendications 4 à 7, **caractérisé en ce que** la partie de circuit d'alimentation (7) comporte un supercondensateur ou un accumulateur en tant que accumulateur intermédiaire d'énergie.

9. Agencement de circuit (1) selon la revendication 2 ou 3 et l'une quelconque des revendications 4 à 8, **caractérisé en ce que** la partie de circuit de baisse de tension (10) commande le commutateur à semi-conducteur (6) en fonction d'un état de charge de l'accumulateur intermédiaire d'énergie.

10. Agencement de circuit (1) selon la revendication 2 ou 3 ou l'une quelconque des revendications dépendantes de celles-ci 4 à 8, **caractérisé en ce que** la partie de circuit de baisse de tension (10) commande le commutateur à semi-conducteur (6) de telle manière qu'une chute de tension sur les diodes (4, 5) est régulée à une valeur constante indépendamment d'un courant passant à l'intérieur de la ligne (15).

11. Utilisation d'un agencement de circuit (1) selon l'une quelconque des revendications précédentes pour l'alimentation de tension en ligne d'un équipement électrique ou électronique (12) disposée dans le secteur d'une ligne (15) transportant un courant continu.

12. Utilisation selon la revendication 11, **caractérisée en ce que** la ligne transportant un courant continu (15) est une ligne de deux lignes de connexion (15, 16) d'un générateur photovoltaïque (17).

13. Dispositif (11) avec un équipement électrique ou électronique (12) et un agencement de circuit (1) selon l'une quelconque des revendications 1 à 10, les bornes (13, 14) étant prévues pour disposer la diode (4) de l'agencement de circuit (1) dans une ligne (15) transportant un courant continu.

14. Dispositif (11) selon la revendication 13, **caractérisé en ce que** l'équipement électrique ou électronique (12) comporte au moins un capteur (30).

15. Dispositif (11) selon la revendication 13 ou 14, **caractérisé en ce que** l'équipement électrique ou électronique (12) comporte une interface de communication (24).

16. Dispositif (11) selon la revendication 15, **caractérisé en ce que** l'interface de communication (24) comporte un transmetteur (25) pour la communication de la ligne d'alimentation par le biais de la ligne (15) transportant un courant continu, dont l'enroulement (26) est connecté en série à la diode (4) entre les bornes (13, 14).
